# EUROPÄISCHE PATENTSCHRIFT

(11) **EP 1 714 211 B1**
(45) Veröffentlichungstag und Bekanntmachung des Hinweises auf die Patenterteilung: **22.08.2007**
(21) Anmeldenummer: 05706747.2
(22) Anmeldetag: 08.02.2005
(51) Int. Cl.: G06F 5/06, H04J 3/06, H04L 12/56, H04L 25/05

(54) **VERFAHREN UND SCHALTUNG ZUR DIFFERENZTAKT-KOMPENSATION ZWISCHEN ZWEI TAKTSYSTEMEN**
METHOD AND CIRCUIT FOR DIFFERENTIAL CLOCK PULSE COMPENSATION BETWEEN TWO CLOCK-PULSE SYSTEMS
PROCEDE ET CIRCUIT POUR LA COMPENSATION DU SIGNAL D'HORLOGE DIFFERENTIEL ENTRE DEUX SYSTEMES D'HORLOGE

(30) Priorität: 10.02.2004 DE 102004006510
(43) Veröffentlichungstag der Anmeldung: 25.10.2006
(73) Patentinhaber: Infineon Technologies AG, 81669 München (DE)
(72) Erfinder: HÜRTGEN, Frank, 40472 Düsseldorf (DE); SCHMAND, Bernd, 42329 Wuppertal (DE)
(74) Vertreter: Graf Lambsdorff, Matthias
(86) Internationale Anmeldenummer: PCT/DE2005/000207
(87) Internationale Veröffentlichungsnummer: WO 2005/076123

(56) Entgegenhaltungen:
- EP-A- 1 185 013
- WO-A-99/59279
- US-A1- 2001 014 924
- US-A1- 2002 101 842
- US-A1- 2002 159 419
- US-B1- 6 400 683

## Beschreibung

Die Erfindung betrifft ein Verfahren zur Differenztakt-Kompensation zwischen dem Taktsystem einer digitalen leitungsgebundenen Datenschnittstelle und dem dazu asynchronen Taktsystem einer digitalen drahtlosen Datenschnittstelle. Ferner betrifft die Erfindung eine entsprechende Schaltung.

Werden Daten über eine drahtlose Datenschnittstelle, wie beispielsweise über eine auf dem Bluetooth-Standard basierende Schnittstelle, empfangen oder gesendet, müssen diese Daten häufig vorher oder anschließend auch über eine leitungsgebundene Datenschnittstelle, wie beispielsweise eine USB-Schnittstelle (USB - Universal Serial Bus), übertragen werden. Innerhalb dieser aus der drahtlosen und der leitungsgebundenen Datenschnittstelle gebildeten Übertragungskette herrschen im Allgemeinen zwei verschiedene Taktsysteme vor. Der Takt der drahtlosen Datenschnittstelle wird durch eine von mindestens zwei der Datenschnittstelle zugeordneten Funk-Sende/Empfangs-Einrichtungen bestimmt. Demgegenüber wird der Takt der leitungsgebundenen Datenschnittstelle häufig durch den externen Takt einer über die leitungsgebundene Datenschnittstelle mit einer Funk-Sende/Empfangs-Einrichtung verbundenen Datenverarbeitungseinrichtung vorgegeben. Bei Bluetooth wird der Takt der drahtlosen Datenschnittstelle durch die Taktversorgung des Bluetooth-spezifischen BT-Master (BT - Bluetooth) bestimmt, wobei der Takt des BT-Slave durch Einfügen eines Phasen- und Frequenz-Offsets mit dem Takt des BT-Master synchronisiert wird. In gleicher Weise bestimmt bei der leitungsgebundenen USB-Schnittstelle der USB-spezifische USB-Master den Takt der USB-Schnittstelle. Ist eine Funk-Sende/Empfangs-Einrichtung über eine USB-Schnittstelle beispielsweise mit einer Datenverarbeitungseinrichtung, beispielsweise einem Laptop verbunden, bestimmt im Allgemeinen die Datenverarbeitungseinrichtung als USB-Master den Takt der USB-Schnittstelle. Sind die Taktsysteme der beiden Schnittstellen - wie im vorliegenden Fall - unabhängig voneinander, führt dies an beiden Schnittstellen zu einer leicht unterschiedlichen Datenrate oder Verarbeitungsgeschwindigkeit der Daten, obwohl die nominellen Datenraten gleich sind. Ohne spezielle Maßnahmen kann dies bei einer entsprechenden Länge der Datensequenz zur Folge haben, dass die von dem ursprünglichen Sender (leitungsgebunden oder drahtlos) einer derartigen Übertragungskette gesendeten Daten nicht mit denjenigen Daten übereinstimmen, die der endgültige Empfänger (leitungsgebunden oder drahtlos) einer solchen Übertragungskette empfängt. Entweder fehlen einige ausgesendete Datenelemente oder es liegen beim Empfänger zusätzliche Datenelemente vor, die nicht versendeten worden sind.

Grundsätzlich können über digitale drahtlose Datenschnittstellen Daten über synchrone Kanäle oder asynchrone Kanäle übertragen werden. Bei synchronen Kanälen werden im Gegensatz zu asynchronen Kanälen feste Zeitschlitze für die Übertragung reserviert. Daher werden synchrone Kanäle für die Übertragung von zeitkritischen Informationen, wie beispielsweise zur Sprachübertragung, eingesetzt, während asynchrone Kanäle für den schubweise auftretenden Datenverkehr verwendet werden. Im Bluetooth-Standard werden synchrone Kanäle als SCO-Kanäle (SCO - synchronous connection oriented) und asynchrone Kanäle als ACL-Kanäle (ACL - asynchronous connectionless) bezeichnet.

Prinzipiell lassen sich die über eine digitale drahtlose Datenschnittstelle zu übertragenden Daten in zwei Kategorien einteilen: Die erste Kategorie umfasst die sogenannten für die drahtlose Datenschnittstelle transparenten Daten. Bei transparenten Daten besitzen die Komponenten der drahtlosen Datenschnittstelle keine Kenntnis hinsichtlich des Informationsgehaltes der Daten, d. h. aus Sicht der Funk-Komponenten handelt es sich bei den Daten lediglich um eine nichtinterpretierbare Folge von Nullen und Einsen, die es über die Datenschnittstelle zu übertragen gilt. Transparente Daten sind beispielsweise die digitalen Daten einer WAV-Datei (WAV steht für wave) eines Musikstücks, wobei die zugrunde liegende Struktur oder Kodierung einer WAV-Datei der Bluetooth-Schnittstelle nicht bekannt ist.

Davon zu unterscheiden sind die aus Sicht der drahtlosen Datenschnittstelle nicht-transparenten Daten. Bei solchen Daten besitzt die Datenschnittstelle Kenntnis hinsichtlich des Informationsgehalts der Daten. Beispielsweise sind nichttransparente Daten spezielle sprachkodierte Daten, welche in einem vom Bluetooth-Standard unterstützten Kodier-Format (µ-law log PCM, A-law log PCM oder CVSD) vorliegen.

Bei der Übertragung von Daten über einen asynchronen Kanal einer drahtlosen Datenschnittstelle und zusätzlich über eine leitungsgebundene Datenschnittstelle ist der asynchrone Differenztakt der zwei Taktsysteme aufgrund des lediglich schubweise auftretenden Datenverkehrs nicht problematisch. Wird hingegen ein synchroner Kanal einer drahtlosen Datenschnittstelle in einer solchen Übertragungskette verwendet, wobei die Daten kontinuierlich über die Übertragungskette übertragen werden, treten ohne entsprechende Kompensationsmaßnahmen Übertragungsfehler, wie vorstehend beschriebenen, zwangsläufig auf. Derartige Übertragungsfehler können nur für unkodierte lineare Daten toleriert werden. Als Gegenmaßnahme kann an der Schnittstelle zwischen einem ersten und einem dazu asynchronen zweiten Taktsystem ein FIFO-Ringspeicher (FIFO - First In First Out) als Datenpuffer eingesetzt werden. Dieser FIFO-Ringspeicher wird sowohl durch ein Taktsignal des Taktsystems der drahtlosen Datenschnittstelle als auch durch ein Taktsignal des Taktsystems der leitungsgebundenen Datenschnittstelle getaktet. Der Füllstand, also die Anzahl der abgelegten Datenelemente, eines solchen FIFO-Ringspeichers gibt an, ob durch den asynchronen Differenztakt zu wenige oder zu viele Daten übertragen wurden. Durch einen entsprechenden Algorithmus kann die Anzahl der Datenelemente im FIFO-Ringspeicher durch Interpolation erhöht oder verringert werden. Nachteilig bei einer solchen Lösung ist, dass bei der Übertragung transparenter Daten über die drahtlose Datenschnittstelle die Interpolation in einer Funk-Sende/Empfangs-Einrichtung, d. h. dem Mobilfunkchip, nicht erfolgen kann, da diese keine Kenntnis über den Informationsgehalt der übertragenen Daten besitzt. Zur fehlerfreien Übertragung transparenter Daten ohne eine entsprechende Endgerät-seitige Interpolation muss daher verhindert werden, dass in der Übertragungskette zwei zueinander asynchronen Taktsysteme vorherrschen.

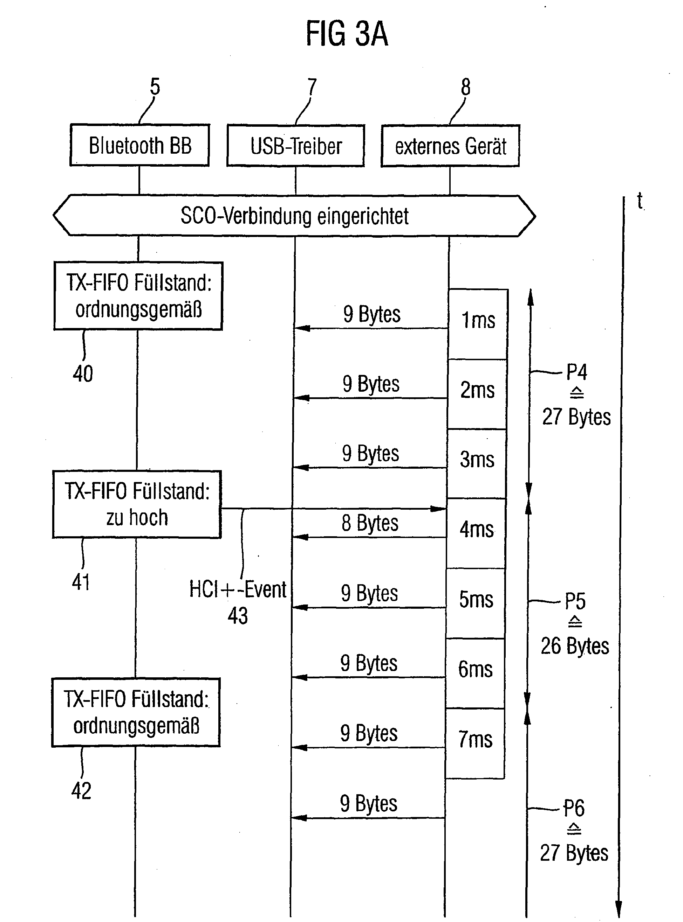

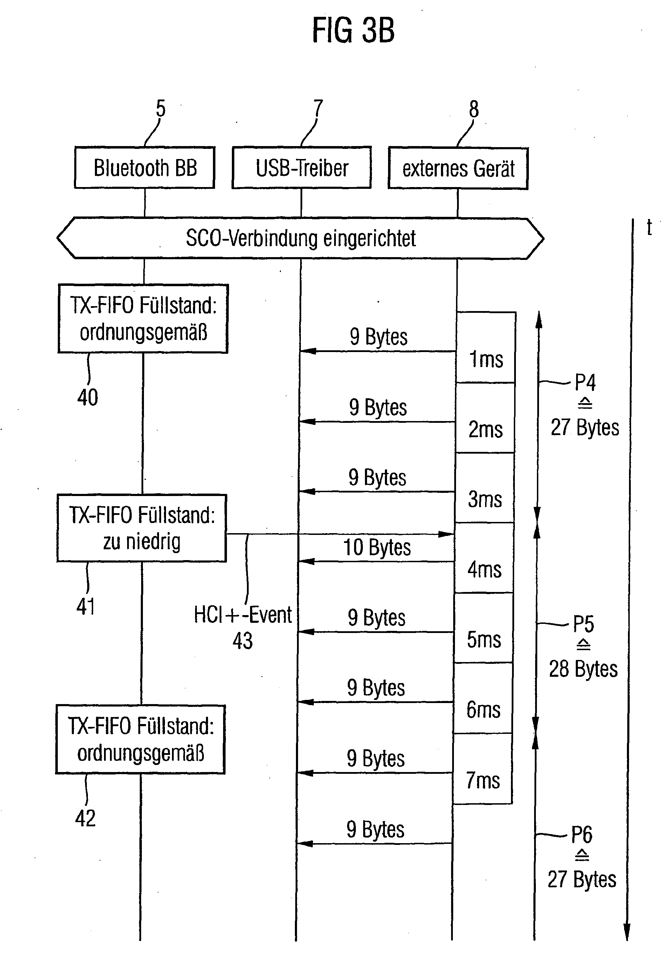

Aus der Druckschrift WO 99/59279 ist eine Vorrichtung und ein Verfahren zur Kompensation von Datenraten-Unterschieden bekannt. Dabei überwacht ein Monitor (siehe Fig. 3 und Seite 2, Zeile 33 bis Seite 3, Zeile 1) den Füllstand eines Pufferspeichers und gibt, wenn sich der Füllstand außerhalb eines zulässigen Wertebereiches befindet, ein Steuersignal an einen Controller ab, welcher die Überabtastrate eines variablen Interpolations-Filters, d.h. die Anzahl der Überabtastwerte innerhalb eines Rahmens, steuert.

Aus der Druckschrift US 2001/0014924 A1 ist eine Vorrichtung und ein Verfahren zur Übertragung von Daten zwischen einem USB-System und einem Telefon-Netzwerk offenbart. Bewegt sich dabei der Füllstand von FIFO-Speichern außerhalb eines erlaubten Bereichs, so wird die Taktrate der USB-Schnittstelle innerhalb von durch den USB-Standard erlaubten Grenzen geeignet verändert, um den Füllstand der FIFO-Speicher wieder in die erlaubten Grenzen zurückzuführen.

Es ist Aufgabe der Erfindung, ein Verfahren zur Differenztakt-Kompensation zwischen dem Taktsystem einer digitalen leitungsgebundenen Datenschnittstelle und dem dazu asynchronen Taktsystem einer digitalen drahtlosen Datenschnittstelle anzugeben, welches sicherstellt, dass der Übergang von transparenten Daten zwischen beiden Taktsystemen keine Datenfehler hervorruft.

Die der Erfindung zugrunde liegende Aufgabenstellung wird durch die Merkmale der unabhängigen Ansprüche 1 und 4 gelöst.

Das erfindungsgemäße Verfahren gemäß Anspruch 1 dient der Differenztakt-Kompensation zwischen dem Taktsystem einer digitalen leitungsgebundenen Datenschnittstelle und dem dazu asynchronen Taktsystem einer digitalen drahtlosen Datenschnittstelle. Dabei wird vorausgesetzt, dass Nutzdaten, welche über die drahtlose Datenschnittstelle im synchronen Betrieb der drahtlosen Datenschnittstelle gesendet werden, auch über die leitungsgebundene Datenschnittstelle übertragen werden. Das erfindungsgemäße Verfahren gliedert sich in zwei Schritte: In einem ersten Schritt wird eine für den asynchronen Differenztakt zwischen dem Taktsystem der leitungsgebundenen Datenschnittstelle und dem Taktsystem der drahtlosen Datenschnittstelle charakteristische Größe überwacht. In einem zweiten Schritt wird die Datenrate der über die leitungsgebundene Datenschnittstelle übertragenen Daten in Abhängigkeit der charakteristischen Größe angepasst.

Durch die erfindungsgemäße Regelung der Datenrate der leitungsgebundenen Datenschnittstelle wird sichergestellt, dass trotz Vorhandenseins eines asynchronen Differenztaktes zwischen beiden asynchronen Taktsystemen an der Schnittstelle zwischen beiden Taktsystemen selbst kein Datenfehler generiert wird, da die Datenraten beider Datenschnittstellen trotz zueinander asynchronem Takt - nunmehr einander entsprechen. Damit bleibt eine fehlerfreie Übertragung der Daten über den synchronen Kanal der drahtlosen Verbindung gewährleistet. Ferner wird die Datenrate der synchronen drahtlosen Verbindung durch das erfindungsgemäße Verfahren nicht beeinflusst. Dies ist insbesondere dann von Vorteil, wenn - wie bei einer Bluetooth-Schnittstelle - die Datenrate der drahtlosen Schnittstelle aufgrund Standard-spezifischer Einschränkung nicht modifiziert werden kann. Im Fall einer Bluetooth-Schnittstelle ist die Datenrate einer synchronen Verbindung mit 64 kbit/s fest vorgegeben. Anzumerken ist, dass sich der asynchrone Differenztakt an den Endgeräten einer Übertragungskette bemerkbar macht. Dies liegt daran, dass die Datenverarbeitungsrate der Endgeräte nicht durch das erfindungsgemäße Verfahren beeinflusst wird. Da diese aber als Signalquelle bzw. -senke in jedem Fall Kenntnis über die Kodierung der Daten haben, es sich also für die Endgeräte nicht um transparente Daten handelt, kann dort eine Interpolation der Daten durchgeführt werden. Durch das erfindungsgemäße Verfahren wird also eine fehlerfreie und aus Sicht der drahtlosen Schnittstelle synchrone Übertragung über die drahtlose Datenschnittstelle gewährleistet, wobei sich der asynchrone Differenztakt nicht mehr zwischen der drahtlosen und der leitungsgebundenen Datenschnittstelle auswirkt, sondern sich lediglich an der Signalquelle bzw. -senke bemerkbar macht und an dieser Stelle leicht kompensiert werden kann.

Die erfindungsgemäße Lösung erfordert, dass das externe System, welches mit einer Sende/Empfangs-Einrichtung über eine leitungsgebundene Schnittstelle verbunden ist, und/oder der auf Seiten der Sende/Empfangs-Einrichtung befindliche Treiber der leitungsgebundenen Schnittstelle durch entsprechende Kontrollsignale oder -kommandos angewiesen werden können, die Datenrate der leitungsgebundenen Schnittstelle anzupassen.

Bei der charakteristischen Größe kann es sich auch um eine Mehrzahl von Größen handeln oder es können erfindungsgemäß mehrere charakteristische Größen verwendet werden. Erfindungsgemäß wird dazu der Füllstand mindestens eines zwischen der drahtlosen Datenschnittstelle und der leitungsgebundenen Datenschnittstelle angeordneten FIFO-Ringspeichers überwacht. Dieser nimmt als Datenpuffer die Nutzdaten zur Zwischenspeicherung auf und wird sowohl durch ein Taktsignal des Taktsystems der drahtlosen Datenschnittstelle als auch durch ein Taktsignal des Taktsystems der leitungsgebundenen Datenschnittstelle getaktet. FIFO-Ringspeicher werden im Stand der Technik zur Kopplung asynchroner Systeme verwendet. Die prinzipielle Funktionsweise von FIFO-Speichern und insbesondere FIFO-Ringspeichern ist in dem Lehrbuch "Halbleiter-Schaltungstechnik" von U. Tietze und Ch. Schenk, Springer-Verlag, 12. Auflage, Seiten 723 - 725, Kapitel 10.2.3, beschrieben. Die genannte Textstelle wird hiermit durch Bezugnahme in den Offenbarungsgehalt der Beschreibung aufgenommen. Sofern es sich um bidirektional betriebene Datenschnittstellen handelt, sollte für jede der beiden Übertragungsrichtungen jeweils ein FIFO-Ringspeicher vorgesehen sein. Es ist aber auch denkbar, lediglich einen FIFO-Ringspeicher zu verwenden, welcher im Zeitmultiplex für beide Übertragungsrichtungen verwendet wird. Werden Daten ausgehend von der drahtlosen Datenschnittstelle über die leitungsgebundene Datenschnittstelle übertragen, entspricht der Einlesetakt des dieser Übertragungsrichtung zugeordneten FIFO-Ringspeichers dem Taktsignal des Taktsystems der drahtlosen Datenschnittstelle. Der Auslesetakt dieses FIFO-Ringspeichers entspricht dem Taktsignal des Taktsystems der leitungsgebundenen Datenschnittstelle. Ist der Datenfluss umgekehrt orientiert, verhält sich auch die Taktzuordnung des dieser Übertragungsrichtung zugeordneten FIFO-Ringspeichers genau umgekehrt. Prinzipiell könnte im Sinne der Erfindung statt eines FIFO-Ringspeichers auch ein beliebiger FIFO-Speicher, insbesondere ein FIFO-Schieberegister, vorgesehen werden. Ein auf einem RAM-Speicherblock basierender FIFO-Ringspeicher bietet jedoch gegenüber einem FIFO-Schieberegister eine Reihe von an dieser Stelle nicht weiter ausgeführten Vorteilen.

Erfindungsgemäß wird die Datenrate der über die leitungsgebundene Datenschnittstelle übertragenen Daten in Abhängigkeit von dem Füllstand des mindestens einen Speichers angepasst, so dass die Anzahl der Datenelemente eines Datenpakets erhöht wird, wenn der Füllstand des Speichers sich unterhalb einer zulässigen Grenze befindet, und die Anzahl der Datenelemente eines Datenpakets erniedrigt wird, wenn der Füllstand des Speichers sich oberhalb einer zulässigen Grenze befindet.

Erfindungsgemäß arbeitet die leitungsgebundenen Schnittstellen Paket-orientiert, wodurch sich dessen Datenrate über eine Erhöhung oder Verringerung der Anzahl der Datenelemente eines Datenpakets leicht ändern lässt, ohne dass der Taktrate dieser Schnittstelle eine Änderung widerfährt.

Prinzipiell wäre es auch denkbar, die Datenrate der drahtlosen Datenschnittstelle anzupassen, statt - wie erfindungsgemäß vorgeschlagen - die Datenrate der leitungsgebundenen Datenschnittstelle anzupassen. Nachteilig an einer solchen Lösung ist jedoch, dass die Möglichkeit, die Datenrate der drahtlosen Datenschnittstelle bei einem synchronen Betrieb der Schnittstelle zu ändern, meist vom Standard nicht unterstützt wird. Insbesondere unterstützt eine Bluetooth-Schnittstelle die Datenratenanpassung einer synchronen SCO-Verbindung nicht.

Unter dem Begriff "asynchroner Differenztakt" wird in der Anmeldung nur der Anteil der Differenz zweier Taktraten verstanden, welcher eine unterschiedliche Nutzdatenrate beider Datenschnittstellen bewirkt und damit einen synchronen Datentransport über die zwei in Serie hintereinander betriebenen Datenschnittstellen behindert. Es ist grundsätzlich denkbar, dass unterschiedliche Taktfrequenzen an beiden Schnittstellen vorliegen, dies jedoch nicht zu einem asynchronen Differenztakt im Sinne der Anmeldung führt. Beispielsweise können Frequenzvielfache aufgrund paralleler oder serieller Datenübertragung vorliegen oder die Taktfrequenz ist aufgrund einer unterschiedlichen Anzahl von Header-Datenelementen beider Datenschnittstellen ungleich. In beiden Fällen ist der asynchrone Differenztakt bei gleicher Nutzdatenrate null.

Vorteilhafterweise werden zur Anpassung der Datenrate der über die leitungsgebundene Datenschnittstelle übertragenen Daten Steuersignale gesendet. Mit Hilfe dieser Steuersignale kann die Datenrate der leitungsgebundenen Datenschnittstelle, insbesondere bei einer Paket-orientiert arbeitenden leitungsgebundenen Datenschnittstelle durch Erhöhen oder Verringern der Anzahl der Datenelemente pro Datenpaket, angepasst werden.

Werden dabei die Daten über die leitungsgebundene Datenschnittstelle in Richtung der drahtlosen Datenschnittstelle übertragen, wird ein erstes Steuersignal in Abhängigkeit der charakteristischen Größe über die leitungsgebundene Datenschnittstelle an eine mit der Funkeinrichtung über die leitungsgebundene Datenschnittstelle verbundene Datenverarbeitungseinrichtung gesendet. Dieses erste Steuersignal weist die Datenverarbeitungseinrichtung an, die Datenrate der von der Datenverarbeitungseinrichtung an die Funkeinrichtung übertragenen Daten zu erhöhen oder zu verringern. Dabei ist es von Vorteil, wenn die Daten über die leitungsgebundene Datenschnittstelle Paket-orientiert übertragen werden und das erste Steuersignal die Datenverarbeitungseinrichtung anweist, die Anzahl der Datenelemente eines Datenpakets - insbesondere um ein Datenelement - zu erhöhen oder zu verringern. Hierbei kann ein Datenpaket auch als Datenpaket pro Zeiteinheit, beispielsweise pro Millisekunde, definiert sein.

Indem bei leitungsgebundenen Schnittstellen, welche Paket-orientiert arbeiten, lediglich die Anzahl der Datenelemente eines Datenpakets erhöht oder verringert werden, lässt sich leicht die Datenrate der leitungsgebundenen Schnittstelle ändern, ohne dass der Taktrate dieser Schnittstelle eine Änderung widerfährt. Wird die Anzahl der Datenelemente pro Paket lediglich um ein Datenelement geändert, kann der asynchrone Differenztakt mit einer hohen Genauigkeit kompensiert werden. Ist der asynchrone Differenztakt relativ groß, müssen mehrere Pakete hintereinander mit gegenüber der nominalen Paketlänge veränderter Paketlänge übertragen werden. Beispielsweise kann es sich bei einem Datenelement um ein Bit, um ein Byte oder ein mehrwertiges Symbol handeln. Voraussetzung für diese Lösung ist, dass die maximal übertragbare Paketgröße zumindest um ein Datenelement, z. B. 1 Byte, größer als die nominelle Paketgröße ist.

Bei dem erfindungsgemäßen Verfahren gemäß Anspruch 4 werden die Daten über die Datenschnittstelle entgegen der Richtung der drahtlosen Datenschnittstelle übertragen. Der Gegenstand von Anspruch 4 unterscheidet sich von dem Gegenstand von Anspruch 1 weiterhin dadurch, dass die Datenrate der über die leitungsgebundene Datenschnittstelle übertragenen Daten erfindungsgemäß derart angepasst wird, dass sich die Anzahl der Datenelemente eines Datenpakets erniedrigt, wenn der Füllstand des Speichers sich unterhalb einer zulässigen Grenze befindet, und sich die Anzahl der Datenelemente eines Datenpakets erhöht, wenn der Füllstand des Speichers sich oberhalb einer zulässigen Grenze befindet.

Vorzugsweise wird ein zweites Steuersignal an einen Funkeinrichtungs-seitigen Treiberschaltkreis zur Ansteuerung der leitungsgebundenen Datenschnittstelle übermittelt. Dieses zweite Steuersignal weist den Funkeinrichtungs-seitigen Treiberschaltkreis an, die Datenrate der von der Funkeinrichtung an die Datenverarbeitungseinrichtung übertragenen Daten zu erhöhen oder zu verringern. Dabei ist es - wie analog für die Gegenrichtung - von Vorteil, wenn die Daten über die leitungsgebundene Datenschnittstelle Paket-orientiert übertragen werden. In diesem Fall weist das zweite Steuersignal den Funkeinrichtungs-seitigen Treiberschaltkreis an, die Anzahl der Datenelemente eines Datenpakets - insbesondere um ein Datenelement - zu erhöhen oder zu verringern. Auch hierbei kann ein Datenpaket als Datenpaket pro Zeiteinheit, beispielsweise pro Millisekunde, definiert sein.

Es ist insbesondere von Vorteil, wenn die Nutzdaten derartige Nutzdaten sind, über welche eine der drahtlosen Datenschnittstelle zugeordnete Funkeinrichtung hinsichtlich des Informationsgehaltes der Nutzdaten, insbesondere über eine den Nutzdaten zugrunde liegende Codierung, keine Kenntnis besitzt. Das erfindungsgemäße Verfahren ermöglicht es, derartige in Hinblick auf die drahtlose Schnittstelle transparente Daten über eine Übertragungsstrecke fehlerfrei zu übertragen, wobei zwei Taktsysteme in der Übertragungsstrecke asynchron zueinander sein können.

Vorteilhafterweise arbeitet die drahtlose Datenschnittstelle nach dem Bluetooth-Standard. In diesem Fall ist es von Vorteil, wenn das erste Steuersignal auf einem Bluetooth-spezifischen HCI-Event (HCI - Host Controller Interface) basiert. Zur Steuerung können sowohl ein oder mehrere HCI-Events verwendet werden.

Bei dem HCI handelt es sich um ein Interface auf einer höheren Protokollschicht, d. h. nicht um ein physikalisches Interface, zwischen der Bluetooth-Sende/Empfangs-Einrichtung und der über eine leitungsgebundene Schnittstelle mit der Bluetooth-Hardware verbundenen Datenverarbeitungseinrichtung, auch als Host bezeichnet. Dabei unterstützt das HCI verschiedene physikalische leitungsgebundene Datenschnittstellen-Typen, beispielsweise USB, RS232 oder UART (Universal Asynchronous Receiver and Transmitter). Die prinzipielle Funktionsweise des HCI ist in der Bluetooth-Spezifikation, Version 1.1, Seiten 543 bis 559, beschrieben. Diese Textpassage wird hiermit durch Bezugnahme in den Offenbarungsgehalt der Beschreibung aufgenommen. Für das HCI sind spezielle HCl-Events, welche in sogenannten HGI-Event-Paketen übertragen werden, vorgesehen, über welche der Host über bestimmte Ereignisse seitens der Bluetooth-Hardware informiert werden kann. Erfindungsgemäß eignen sich diese HCI-Events zur Steuerung der Datenrate der leitungsgebundenen Datenschnittstelle, wenn Daten von dem Host an die Bluetooth-Sende/Empfangs-Einrichtung übertragen werden. Über ein solches HCI-Event kann die Bluetooth-Hardware festlegen, wie viele synchrone Daten der Host beim nächsten synchronen Zeitpunkt senden soll. Da bisher im Bluetooth-Standard spezielle HCI-Events, mit denen die Datenrate der leitungsgebundenen Datenschnittstelle gesteuert werden kann, noch nicht spezifiziert sind, werden erfindungsgemäß hierfür ein oder mehrere spezielle herstellerspezifische HCI-Events, sogenannte HCI+-Events, definiert, mit denen die vom Host über die leitungsgebundene Datenschnittstelle gesendete Datenrate an den Takt der Bluetooth-Funk-Schnittstelle angepasst werden kann.

In diesem Fall ist es von Vorteil, wenn die leitungsgebundene Datenschnittstelle nach dem USB-Standard arbeitet. Damit kann einerseits die Übertragung der Nutzdaten zwischen der Bluetooth-Hardware und dem Host über sogenannte HCI-Datenpakete durchgeführt werden, andererseits können HCI-Events genutzt werden, um die Datenrate der vom Host über die leitungsgebundene Datenschnittstelle ausgesendeten Daten anzupassen. HCI-Datenpakete dienen beim HCI zum Austausch von Daten zwischen dem Host und der Bluetooth-Hardware. Im Unterschied zu HCI-Event-Paketen können HCI-Datenpakete sowohl von der Bluetooth-Hardware als auch vom Host ausgesendet werden.

Nach einer vorteilhaften Ausgestaltung des erfindungsgemäßen Verfahrens ist es vorgesehen, dass die empfangenen oder zu sendenden Daten in der Datenverarbeitungseinrichtung interpoliert werden. Grundsätzlich wirkt sich der asynchrone Differenztakt - wie oben bereits beschrieben - an den Endgeräten einer Übertragungskette aus. Da diese aber als Signalquelle bzw. -senke in jedem Fall Kenntnis über die Kodierung der Daten haben, kann dort eine Interpolation der Daten durchgeführt werden. Im Empfangsfall wird die Interpolation anhand bestimmter von Seiten des Endgeräts erwarteter Datenelement-Sequenzen oder Regelmäßigkeiten zwischen den Datenelementen, welche sich aus der Kodierung der Daten ergeben, durchgeführt.

Eine für die Ausführung der erfindungsgemäßen Verfahren geeignete Schaltung dient der Differenztakt-Kompensation zwischen dem Taktsystem einer digitalen leitungsgebundenen Datenschnittstelle und dem dazu asynchronen Taktsystem einer digitalen drahtlosen Datenschnittstelle. Dabei wird vorausgesetzt, dass Nutzdaten, welche über die drahtlose Datenschnittstelle im synchronen Betrieb der drahtlosen Datenschnittstelle empfangen oder gesendet werden, auch über die leitungsgebundene digitale Datenschnittstelle übertragen werden. Die Schaltung umfasst ein Mittel zum Überwachen einer für den asynchronen Differenztakt zwischen dem Taktsystem der leitungsgebundenen Datenschnittstelle und dem Taktsystem der drahtgebundenen Datenschnittstelle charakteristischen Größe. Darüber hinaus ist in der erfindungsgemäßen Schaltung ein Mittel zum Anpassen der Datenrate der über die leitungsgebundene Datenschnittstelle übertragenen Daten vorgesehen, welches die Anpassung in Abhängigkeit der charakteristischen Größe vornimmt.

Weitere vorteilhafte Ausgestaltungen der Erfindung sind in den Unteransprüchen angegeben.

Die Erfindung wird nachfolgend anhand eines Ausführungsbeispiels unter Bezugnahme auf die Zeichnungen näher erläutert; in diesen zeigen:
- Fig. 1: eine Darstellung einer Übertragung von über eine Bluetooth-Schnittstelle gesendeter oder empfangener Daten über eine USB-Schnittstelle zwischen einer Bluetooth-Sende/Empfangs-Einrichtung und einem externen Gerät ;
- Fig. 2a: ein Ablaufdiagramm der erfindungsgemäßen Anpassung der Datenrate der USB-Schnittstelle bei Überschreiten eines bestimmten Füllstandes eines FIFO-Ringspeichers, wobei die Daten entgegen der Richtung der Bluetooth-Schnittstelle übertragen werden;
- Fig. 2b: ein Ablaufdiagramm der erfindungsgemäßen Anpassung der Datenrate der USB-Schnittstelle bei Unterschreiten eines bestimmten Füllstandes eines FIFO-Ringspeichers, wobei die Daten entgegen der Richtung der Bluetooth-Schnittstelle übertragen werden;
- Fig. 3a: ein Ablaufdiagramm der erfindungsgemäßen Anpassung der Datenrate der USB-Schnittstelle bei Überschreiten eines bestimmten Füllstandes eines FIFO-Ringspeichers, wobei die Daten in Richtung der Bluetooth-Schnittstelle übertragen werden; und
- Fig. 3b: ein Ablaufdiagramm der erfindungsgemäßen Anpassung der Datenrate der USB-Schnittstelle bei Unterschreiten eines bestimmten Füllstandes eines FIFO-Ringspeichers, wobei die Daten in Richtung der Bluetooth-Schnittstelle übertragen werden.

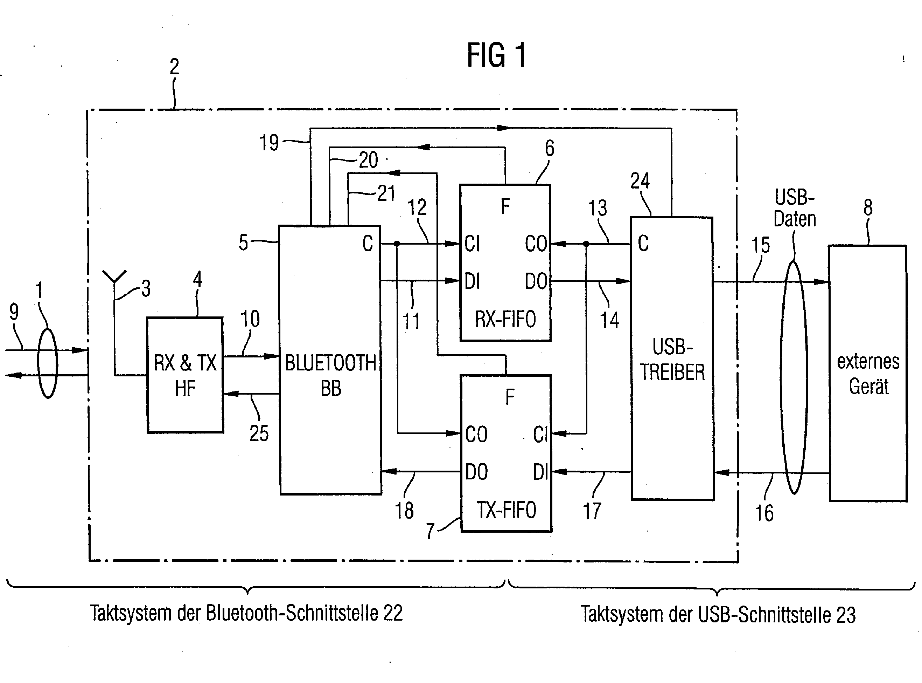

In Fig. 1 ist eine Übertragung von über eine Bluetooth-Schnittstelle gesendeten oder empfangenen Daten über eine USB-Schnittstelle zwischen einer Bluetooth-Sende/Empfangs-Einrichtung 2 und einem externen Gerät 8 dargestellt. Daten werden bidirektional über einen Bluetooth-Kanal 1 von der Bluetooth-Sende/Empfangs-Einrichtung 2 gesendet oder empfangen. Die Einrichtung 2 umfasst eine Antenne, eine Hochfrequenz-Schaltung 4, eine Bluetooth-Basisband-Schaltung 5, zwei FIFO-Ringspeicher 6 und 7 sowie einen Funk-Einriehtungsseitigen USB-Treiberschaltkreis 24. Die Bluetooth-Sende/Empfangs-Einrichtung 2 ist über eine bidirektionale USB-Schnittstelle mit einem externen Gerät 8, beispielsweise mit einem Laptop, verbunden. Die Datenflussrichtung ausgehend von der Bluetooth-Schnittstelle hin zum externen Gerät 8 wird nachfolgend mit dem Begriff RX-Richtung bezeichnet, die entgegengerichtete Datenflussrichtung mit dem Begriff TX-Richtung.

Über den synchronen Bluetooth-SCO-Kanal 1 in RX-Richtung empfangene Daten 9 werden in der Hochfrequenz-Schaltung 4 ins Basisband gemischt. Das empfangene Basisband-Signal 10 wird in der Basisband-Schaltung 5 durch einen nicht dargestellten Analog/Digital-Wandler in ein digitales Signal umgewandelt. Nach einer digitalen Prozessierung wird das prozessierte Datensignal 11 in einen ersten FIFO-Ringspeicher 6 eingelesen, welcher der RX-Richtung zugewiesen ist. Der Takt 12 zum Einlesen der Daten ist aus dem Taktsystem der Bluetooth-Schnittstelle 22 abgeleitet. Der Takt der drahtlosen Datenschnittstelle wird durch die Taktversorgung des BT-Master bestimmt, wobei der Takt des BT-Slave durch Einfügen eines Phasen- und Frequenz-Offsets mit dem Takt des BT-Master synchronisiert wird. Das Auslesen der Daten aus dem ersten FIFO-Ringspeicher 6 wird durch ein Taktsignal 13 gesteuert, welches seitens des USB-Treibers 24 zugeführt wird. Dieses Taktsignal 13 wird aus dem Taktsystem der USB-Schnittstelle 23 abgeleitet. Da der USB-Treiber 24 als USB-Slave fungiert, wird das Taktsignal 13 und das Taktsystem der USB-Schnittstelle daher durch das externe Gerät 8, welches als USB-Master arbeitet, bestimmt. Der asynchrone Differenztakt der asynchronen Taktsignale 12 und 13 bewirkt, dass der Füllstand des ersten FIFO-Ringspeichers 6 (und auch des zweiten FIFO-Ringspeichers 7) entweder zunimmt oder abnimmt. Ist der asynchrone Differenztakt der Taktsignale 11 und 13 null, bleibt der Füllstand des ersten FIFO-Ringspeichers 6 konstant. Das Ausgangssignal des ersten FIFO-Ringspeichers 6 wird im Takt des Taktsignals 13 dem USB-Treiber 24 zugeführt, welcher aus dem Datensignal 14 ein USB-konformes Datensignal 15 generiert, welches über eine USB-konforme Leitungsverbindung an das externe Gerät 8 übertragen wird. Ein derartiges USB-Signal 15 wird als differentielles Signal über mehrere parallele Leiter übertragen.

In TX-Richtung wird ein USB-Datensignal 16 von dem externen Gerät 8 an den USB-Treiberschaltkreis 24 über eine Leitungsverbindung übertragen. Hierbei werden beide USB-Signale 15 und 16 über dieselbe bidirektionale USB-Leitungsverbindung transportiert. Das empfangene Signal 17 wird anschließend dem zweiten FIFO-Ringspeicher 7 zugeführt, dessen Einlesetakt dem Taktsignal 13 des Taktsystems 23 der USB-Schnittstelle entspricht. Der zweite FIFO-Ringspeicher 7 der TX-Richtung ist identisch zu dem ersten FIFO-Ringspeicher 6 der RX-Richtung aufgebaut. Das Auslesen des zweiten FIFO-Ringspeichers 7 erfolgt im Takt des Taktsignals 12 des Taktsystems 22 der Bluetooth-Schnittstelle. Das ausgelesene Datensignal 18 wird der Basisband-Schaltung zugeführt, welche ein kanalkodiertes Bluetooth-Basisband-Signal 25 erzeugt, welches in der Hochfrequenz-Schaltung 4 auf eine Trägerfrequenz gemischt wird und über den Bluetooth-Kanal 1 übertragen wird.

Erfindungsgemäß soll verhindert werden, dass Fehler bei der Datenübergabe zwischen dem Taktsystem der Bluetooth-Schnittstelle und dem davon unabhängigen Taktsystem der USB-Schnittstelle auftreten. Dies kann insbesondere dann passieren, wenn vom externen Gerät 8, dem USB-Master, zu festen durch das Taktsystem der USB-Schnittstelle bestimmten Zeitpunkten feste Paketgrößen übertragen werden. Um Fehler zu vermeiden, wird die Datenrate der USB-Verbindung an die Datenrate der synchronen Bluetooth-Verbindung angepasst. Es ist vorgesehen, dass die Bluetooth-Sende/Empfangs-Einrichtung 2 die Datenrate an der USB-Schnittstelle mit einem speziellen Protokoll steuern kann. In TX-Richtung ist hierfür vorgesehen, spezielle HCI+-Events über die USB-Schnittstelle an das externe Gerät 8 zu übersenden, welche das externe Gerät 8 anweisen, die Datenrate der in TX-Richtung über die USB-Schnittstelle übertragenen Signale anzupassen. In RX-Richtung wird zur Anpassung der Datenrate ein internes Steuersignal 19 verwendet, welches den USB-Treiber 24 anweist, die Datenrate der in RX-Richtung über die USB-Schnittstelle übertragenen Signale anzupassen. Um das interne Signal 19 oder entsprechende über die USB-Schnittstelle übertragene HCI+-Events auszulösen, wird erfindungsgemäß der Füllstand der FIFO-Ringspeicher 6 bzw. 7 überwacht. Dazu dienen die Signale 20 und 21 des ersten FIFO-Ringspeichers 6 bzw. des zweiten FIFO-Ringspeichers 7, welche den Füllstand des jeweiligen FIFO-Ringspeichers beschreiben. Diese Signale werden der Basisband-Schaltung 5 zugeführt, die die Überwachung des Füllstands durchführt. Verlässt der aktuelle Füllstand eines Ringspeichers 6 oder 7 einen vorher definierten Toleranzbereich, wird das Steuersignal 19 bzw. ein entsprechendes HCI+-Event seitens der Basisband-Schaltung ausgelöst. Das Steuersignal 19 bewirkt, dass bei einem zu hohen Füllstand mehr Datenelemente, bei einem zu niedrigen Füllstand weniger Datenelemente für das nächste Datenpaket von dem USB-Treiber 13 aus dem ersten Ringspeicher 6 ausgelesen werden, so dass der Füllstand wieder auf ein ordnungsgemäßes Maß angepasst oder eingeregelt wird. Umgekehrt bewirkt ein über die USB-Schnittstelle als Steuersignal übertragenes HCI+-Event (nicht explizit dargestellt), dass das externe Gerät 8 bei einem zu hohen Füllstand weniger Datenelemente, bei einem zu niedrigen Füllstand mehr Datenelemente in dem nächsten Datenpaket über die USB-Schnittstelle in Richtung des zweiten Ringspeichers 7 übertragen werden. Auch in diesem Fall wird so der Füllstand wieder auf ein ordnungsgemäßes Maß angepasst. Insofern wird durch die erfindungsgemäßen Maßnahmen der Füllstand auf ein ordnungsgemäßes Maß geregelt.

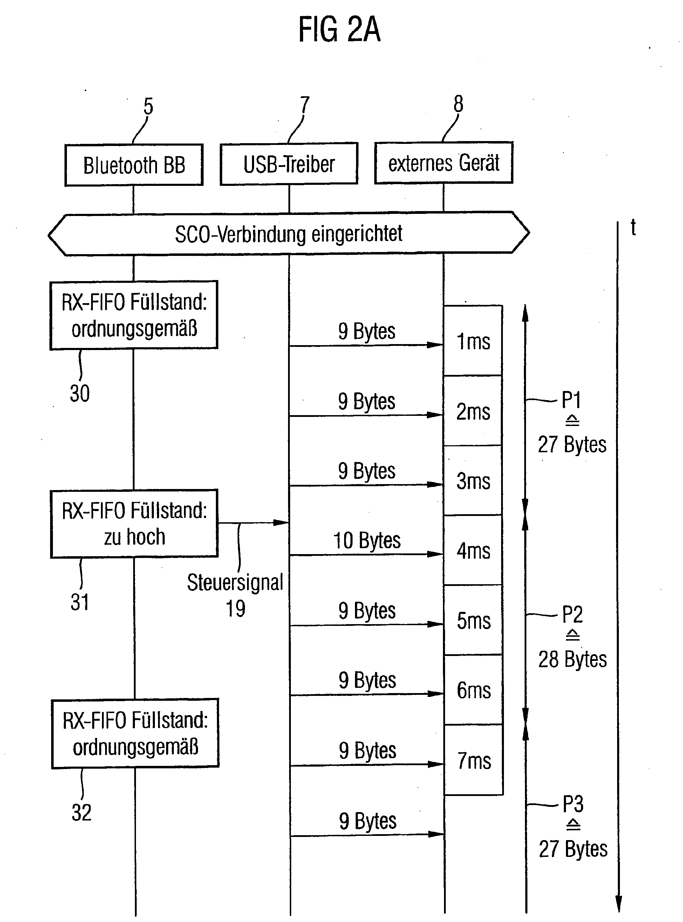

In Fig. 2a ist die erfindungsgemäße Anpassung der Datenrate der USB-Schnittstelle in RX-Richtung bei Überschreiten eines bestimmten Füllstandes des ersten FIFO-Ringspeichers 6 an einem konkreten Beispiel in einem Ablaufdiagramm dargestellt. Die mit gleichnamigen Bezugszeichen versehenen Figurenbestandteile gemäß der Fig. 1 und Fig. 2a entsprechen einander. In dem Ablaufdiagramm sind die Aktionen der Basisband-Schaltung 5, des Funk-Einreichtungs-seitigen USB-Treibers 24 und des externen Geräts 8 nebeneinander dargestellt, wobei die zeitliche Reihenfolge von oben nach unten verläuft.

In dem Beispiel wird eine Bluetooth-Übertragung transparenter Daten über einen synchronen SCO-Kanal mit einer Nutzdatenrate von 64 kbit/s angenommen. Die in der Sende/Empfangs-Einrichtung 2 (vgl. Fig. 1) empfangenen Daten müssen synchron über die USB-Schnittstelle mit 8 Bytes Nutzdaten pro Sekunde zum externen Gerät 8 übertragen werden. Für das HCI sind spezielle HCI-Datenpakete, sogenannte HCI-SCO-Datenpakete vorgesehen, über welche ein synchroner Datenaustausch zwischen einer Bluetooth-Sende/Empfangseinrichtung und einem Host, d. h. einem externen Gerät 8, stattfinden kann. Im vorliegenden Beispiel werden für die Datenübertragung der empfangenen Daten zum externen Gerät 8 HCI-SCO-Datenpakete mit einer nominellen Paketlänge von 27 Bytes angenommen. Derartige HCI-SCO-Datenpakete weisen grundsätzlich einen Header von 3 Bytes auf, d. h. in einem Datenpaket von 27 Bytes Länge sind lediglich 24 Bytes für Nutzdaten verwendbar. Bei HCI-Datenpaketen ist vorgesehen, dass die Anzahl der Nutzdaten variabel gewählt werden kann. Es ist insbesondere möglich, statt eines Paketes mit nominell 27 Bytes Gesamtlänge (24 Bytes Nutzdaten) auch ein Paket mit 26 Bytes Gesamtlänge (23 Bytes Nutzdaten) oder mit 28 Bytes Gesamtlänge (25 Bytes Nutzdaten) zu übermitteln. Zur nominellen Übertragung von 8 Bytes Nutzdaten pro Sekunde zum externen Gerät 8 müssen somit insgesamt 9 Bytes pro Sekunde übertragen werden. Dementsprechend ist in Fig. 2a dargestellt, dass der USB-Treiber 24 nominell pro Millisekunde 9 Bytes Gesamtdaten an das externe Gerät 8 überträgt. Parallel dazu überprüft die Basisband-Schaltung 5 in regelmäßigen zeitlichen Abständen, ob sich der Füllstand des ersten FIFO-Ringspeichers 6 innerhalb zulässiger Grenzen befindet. Bei einer ersten Überprüfung 30 des Füllstands des ersten Ringspeichers 6 wird festgestellt, dass der Füllstand sich ordnungsgemäß innerhalb der zulässigen Grenzen befindet. Daher werden in dem ersten HCI-SCO-Datenpaket P1 dreimal 9 Bytes pro Millisekunde, also insgesamt 27 Bytes übertragen. Das in Fig. 2a dargestellte Millisekunden-Raster wird in Abhängigkeit des Takts des externen Geräts 8, also des USB-Master, erzeugt. Dieser Takt ist von dem Takt der Bluetooth-Schnittstelle unabhängig, d. h. beide Takte sind asynchron zueinander. Dies bewirkt, dass trotz nominell gleicher Nutzdatenrate der Bluetooth-Schnittstelle und der USB-Schnittstelle der Füllstand des Ringspeichers 6 mit der Zeit ab- oder zunimmt. Ist die Taktrate der Bluetooth-Schnittstelle leicht höher als die Taktrate der USB-Schnittstelle, nimmt der Füllstand des Ringspeichers 6 mit der Zeit zu. Im umgekehrten Fall nimmt der Füllstand des Ringspeichers mit der Zeit ab. Bei der zweiten Überprüfung 31 des Füllstands wird seitens der Basisband-Schaltung 5 festgestellt, dass der Füllstand zu hoch ist, sich also außerhalb der zulässigen Grenzen befindet. Hierauf reagiert die Basisband-Schaltung 5, indem diese den USB-Treiber 24 über das Steuersignal 19 anweist, in dem nächsten HCI-SCO-Datenpaket P2 mehr als die nominell 24 Bytes Nutzdaten zu übermitteln. Das zweite Paket P2 weist daher eine Gesamtlänge von 28 Bytes (25 Bytes Nutzdaten) auf, wobei während der Übertragung des zweiten HCI-SCO-Datenpakets P2 zunächst 10 Bytes und anschließend zweimal 9 Bytes Gesamtdaten pro Millisekunde übertragen werden. Bei der dritten Überprüfung 32 des Füllstands wird seitens der Basisband-Schaltung wieder festgestellt, dass der Füllstand sich wieder ordnungsgemäß innerhalb der zulässigen Grenzen befindet. Ursächlich dafür ist, dass während der Übertragung des zweiten Pakets P2 über die USB-Schnittstelle kurzfristig mehr Nutzdaten übertragen und aus dem ersten Ringspeicher 6 ausgelesen wurden als währenddessen von Seiten der Bluetooth-Schnittstelle übertragen und in den ersten Ringspeicher 6 eingelesen wurden. Somit wurde der zunächst zu hohe Füllstand des ersten Ringspeichers 6 reduziert. Das dritte Paket P3 wird also wieder mit der nominellen Länge von 27 Bytes Gesamtlänge übertragen.

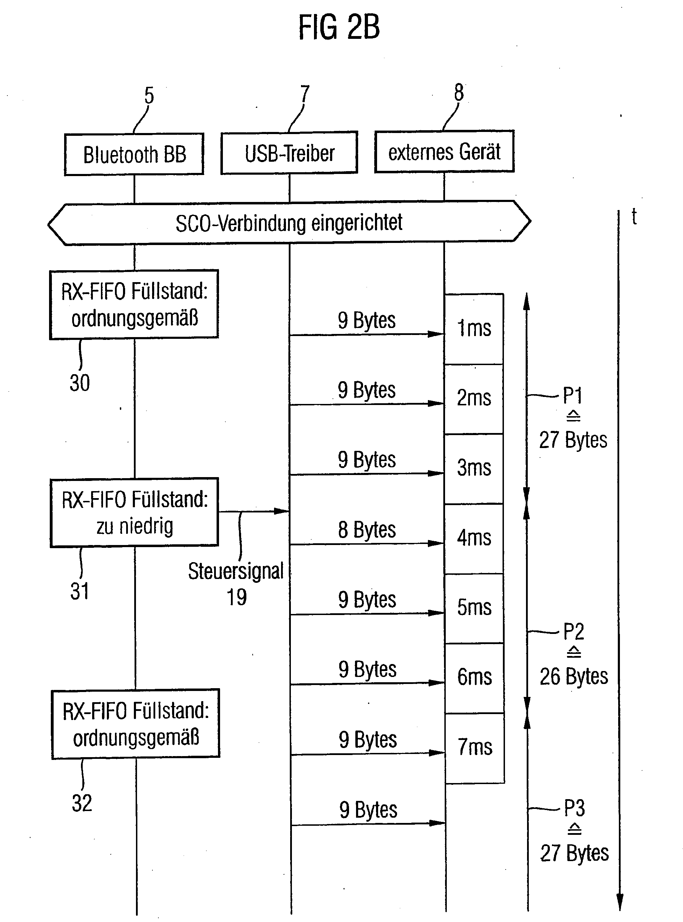

In Fig. 2b ist ein Ablaufdiagramm des Verfahrens bei Unterschreiten eines bestimmten Füllstandes des FIFO-Ringspeichers 6 bei sonst gleichen Voraussetzungen wie in Fig. 2a dargestellt. Die mit gleichnamigen Bezugszeichen versehenen Figurenbestandteile gemäß der Fig. 2a und Fig. 2b entsprechen einander. Bei der zweiten Überprüfung 31 des Füllstands des ersten Ringspeichers 6 wird hier entgegen dem Verfahrensablauf in Fig. 2a festgestellt, dass der Füllstand zu niedrig ist. Hierauf reagiert die Basisband-Schaltung 5, indem diese den USB-Treiber 24 über das Steuersignal 19 anweist, in dem nächsten HCI-SCO-Datenpaket P2 weniger als die nominell 24 Bytes Nutzdaten zu übermitteln. Das zweite Paket P2 weist daher eine Gesamtlänge von 26 Bytes (23 Bytes Nutzdaten) auf, wobei während der Übertragung des zweiten HCI-SCO-Datenpakets P2 zunächst 8 Bytes und anschließend zweimal 9 Bytes Gesamtdaten pro Millisekunde übertragen werden. Bei der dritten Überprüfung 32 des Füllstands wird seitens der Basisband-Schaltung 5 erneut festgestellt, dass der Füllstand sich wieder ordnungsgemäß innerhalb der zulässigen Grenzen befindet. Ursächlich dafür ist, dass mit dem zweiten Paket P2 kurzfristig weniger Nutzdaten übertragen und aus dem ersten Ringspeicher 6 ausgelesen wurden als währenddessen von Seiten der Bluetooth-Schnittstelle übertragen und in den ersten Ringspeicher 6 eingelesen wurden. Somit wurde der zunächst zu niedrige Füllstand des ersten Ringspeichers 6 erhöht. Das dritte Paket P3 wird also wieder mit der nominellen Gesamtlänge von 27 Bytes übertragen.

In Fig. 3a ist die erfindungsgemäße Anpassung der Datenrate der USB-Schnittstelle in TX-Richtung bei Überschreiten eines bestimmten Füllstandes des zweiten FIFO-Ringspeichers 7 an einem konkreten Beispiel in einem Ablaufdiagramm dargestellt. Für die Übertragung der Daten in TX-Richtung über die Bluetooth-Schnittstelle wird in analoger Weise zu Fig. 2a und Fig. 2b ein SCO-Kanal mit 64 kbit/s angenommen. Die Übertragung der Daten von dem externen Gerät 8 zum USB-Treiber 24 über die USB-Schnittstelle erfolgt wie in Fig. 2a und Fig. 2b über HCI-SCO-Datenpakete, welche den gleichen Aufbau wie in Fig. 2a und Fig. 2b aufweisen. Die nominelle Paketgesamtlänge beträgt 27 Bytes pro Paket (24 Bytes Nutzdaten), d. h. 9 Bytes pro Millisekunde. Lediglich die Übertragungsrichtung der HCI-SCO-Datenpakete verläuft im Vergleich zur Übertragung in RX-Richtung in umgekehrter Richtung, d. h. vom externen Gerät 8 über den USB-Treiber 24 zur Basisband-Schaltung 5. Im Unterschied zu Fig. 2a und Fig. 2b wird im Ablaufdiagramm der Füllstand des zweiten FIFO-Ringspeichers 7 in regelmäßigen zeitlichen Abständen überprüft. Bei einer ersten Überprüfung 40 des Füllstands des zweiten Ringspeichers 7 wird festgestellt, dass der Füllstand sich ordnungsgemäß innerhalb der zulässigen Grenzen befindet. Daher werden in dem ersten HCI-SCO-Datenpaket P4 dreimal 9 Bytes pro Millisekunde, also insgesamt 27 Bytes übertragen. Das in Fig. 3a dargestellte Millisekunden-Raster wird in Abhängigkeit des Takts des externen Geräts 8, also des USB-Master, erzeugt. Dieser Takt ist von dem Takt der Bluetooth-Schnittstelle unabhängig, d. h. beide Takte sind asynchron zueinander. Dies bewirkt, dass trotz nominell gleicher Nutzdatenrate der Bluetooth-Schnittstelle und der USB-Schnittstelle der Füllstand des zweiten Ringspeichers 7 mit der Zeit ab- oder zunimmt. Ist die Taktrate der Bluetooth-Schnittstelle leicht höher als die Taktrate der USB-Schnittstelle, nimmt der Füllstand des Ringspeichers 7 mit der Zeit ab. Im umgekehrten Fall nimmt der Füllstand des Ringspeichers 7 mit der Zeit zu. Im vorliegenden Fall wird bei der zweiten Überprüfung 41 des Füllstands seitens der Basisband-Schaltung 5 festgestellt, dass der Füllstand zu hoch ist, sich also außerhalb der zulässigen Grenzen befindet. Hierauf reagiert die Basisband-Schaltung 5, indem diese das externe Gerät 8 über ein entsprechendes HCI+-Event 43 anweist, in dem nächsten HCI-SCO-Datenpaket P4 weniger als die nominell 24 Bytes Nutzdaten über die USB-Schnittstelle zu übermitteln. Das zweite Paket P4 weist daher eine Gesamtlänge von 26 Bytes (23 Bytes Nutzdaten) auf, wobei während der Übertragung des zweiten HCI-SCO-Datenpakets P4 zunächst 8 Bytes und anschließend zweimal 9 Bytes Gesamtdaten pro Millisekunde übertragen werden. Bei der dritten Überprüfung 42 des Füllstands wird seitens der Basisband-Schaltung 5 wieder festgestellt, dass der Füllstand sich wieder ordnungsgemäß innerhalb der zulässigen Grenzen befindet. Ursächlich dafür ist, dass während der Übertragung des zweiten Pakets P4 über die USB-Schnittstelle kurzfristig weniger Nutzdaten übertragen und damit in den zweiten Ringspeicher 7 eingelesen wurden als währenddessen von Seiten der Bluetooth-Schnittstelle aus dem zweiten Ringspeicher 7 ausgelesen und übertragen wurden. Somit wurde der zunächst zu hohe Füllstand des zweiten Ringspeichers 7 reduziert. Das dritte Paket P6 wird also wieder mit der nominellen Gesamtlänge von 27 Bytes übertragen.

In Fig. 3b ist ein Ablaufdiagramm des Verfahrens bei Unterschreiten eines bestimmten Füllstandes des FIFO-Ringspeichers 7 bei sonst gleichen Voraussetzungen wie in Fig. 3a dargestellt. Die mit gleichnamigen Bezugszeichen versehenen Figurenbestandteile gemäß der Fig. 3a und Fig. 3b entsprechen einander. Bei der zweiten Überprüfung 41 des Füllstands des ersten Ringspeichers 6 wird hier entgegen dem Verfahrensablauf in Fig. 3a festgestellt, dass der Füllstand zu niedrig ist. Hierauf reagiert die Basisband-Schaltung 5, indem diese das externe Gerät 8 über ein entsprechendes HCI+-Event 43 anweist, in dem nächsten HCI-SCO-Datenpaket P4 mehr als die nominell 24 Bytes Nutzdaten über die USB-Schnittstelle zu übermitteln. Das zweite Paket P4 weist daher eine Gesamtlänge von 28 Bytes (23 Bytes Nutzdaten) auf, wobei während der Übertragung des zweiten HCI-SCO-Datenpakets P4 zunächst 10 Bytes und anschließend zweimal 9 Bytes Gesamtdaten pro Millisekunde übertragen werden. Bei der dritten Überprüfung 42 des Füllstands wird seitens der Basisband-Schaltung 5 wieder festgestellt, dass der Füllstand sich wieder ordnungsgemäß innerhalb der zulässigen Grenzen befindet. Ursächlich dafür ist, dass während der Übertragung des zweiten Pakets P4 über die USB-Schnittstelle kurzfristig mehr Nutzdaten übertragen und damit in den zweiten Ringspeicher 7 eingelesen wurden als währenddessen von Seiten der Bluetooth-Schnittstelle aus dem zweiten Ringspeicher 7 ausgelesen und übertragen wurden. Somit wurde der zunächst zu niedrige Füllstand des zweiten Ringspeichers 7 erhöht. Das dritte Paket P6 wird also wieder mit der nominellen Gesamtlänge von 27 Bytes übertragen.

Wie vorstehend bereits mehrfach beschrieben, wirkt sich der asynchrone Differenztakt trotz der erfindungsgemäßen Datenratenanpassung an den End- oder Anfangspunkten einer Übertragungskette, also dem externen Gerät 8, aus. Trotzdem ist die erfindungsgemäße Vorgehensweise aus zwei Gründen von Vorteil:
1. Die übertragenen oder zu übertragenden Daten müssen nicht zwingend auch synchrone Daten sein, selbst wenn die Übertragung über einen synchronen Kanal stattfindet. Handelt es sich bei den Daten nicht um synchrone Daten, ist ein externes Gerät, welches die Daten verarbeitet, nicht gezwungen, die Daten im eigenen Takt zu verarbeiten. Beispielsweise ist es denkbar, dass über einen synchronen Kanal asynchrone Daten übertragen werden, um gewisse Quality-of-Service-Anforderung (QoS) einzuhalten. Ein anderes Beispiel für die Übertragung von im eigentlichen Sinne asynchronen Daten stellt die Übertragung von Daten einer WAV-Datei dar. Handelt es sich bei dem externen Gerät 8 beispielsweise um einen Laptop oder PC, welches die gespeicherten digitalen Daten einer WAV-Datei eines Musikstücks über ein USB-Dongle mit Bluetooth-Funktionalität an einen Bluetooth-fähigen drahtlosen Kopfhörer überträgt, kann das externe Gerät 8 angewiesen werden, die Datenrate der USB-Schnittstelle entsprechend der Datenrate der Bluetooth-Schnittstelle anzupassen, ohne dass dies zu Problemen führt.
2. Selbst wenn es sich bei den zu übertragenden Daten um synchrone Daten handelt, sind die Daten für ein externes Gerät 8 grundsätzlich nicht transparent, d. h. es können dort entsprechende Maßnahmen zu Kompensation des asynchronen Differenztaktes vorgenommen werden. Beispielsweise kann in dem Gerät 8 eine Interpolation der Daten durchgeführt werden.

## Patentansprüche

1. Verfahren zur Differenztakt-Kompensation zwischen dem Taktsystem (23) einer digitalen leitungsgebundenen Datenschnittstelle und dem dazu asynchronen Taktsystem (22) einer digitalen drahtlosen Datenschnittstelle, wobei Nutzdaten (17), welche über die drahtlose Datenschnittstelle im synchronen Betrieb der drahtlosen Datenschnittstelle gesendet werden, über die leitungsgebundene Datenschnittstelle Paket-orientiert übertragen werden, mit den Schritten:
(1) Überwachen des Füllstands (21) mindestens eines zwischen der drahtlosen Datenschnittstelle und der leitungsgebundenen Datenschnittstelle angeordneten Speichers (7), welcher die Nutzdaten (17) zur Zwischenspeicherung aufnimmt und sowohl durch ein Taktsignal (12) des Taktsystems der drahtlosen Datenschnittstelle als auch durch ein Taktsignal (13) des Taktsystems der leitungsgebundenen Datenschnittstelle getaktet wird; **gekennzeichnet durch**
(2) Anpassen der Datenrate der über die leitungsgebundene Datenschnittstelle übertragenen Daten (16) in Abhängigkeit von dem Füllstand (21) des Speichers (7), indem die Anzahl der Datenelemente eines Datenpakets erhöht wird, wenn der Füllstand (21) sich unterhalb einer zulässigen Grenze befindet, und die Anzahl der Datenelemente eines Datenpakets erniedrigt wird, wenn der Füllstand (21) sich oberhalb einer zulässigen Grenze befindet .

2. Verfahren nach Anspruch 1, **dadurch gekennzeichnet , dass** der verfahrensschritt 2) folgenden Schritt umfasst:
- Senden eines ersten Steuersignals in Abhängigkeit von dem Füllstand (21) über die leitungsgebundene Datenschnittstelle an eine mit der Funkeinrichtung (2) über die leitungsgebundene Datenschnittstelle verbundene Datenverarbeitungseinrichtung (8), welches die Datenverarbeitungseinrichtung (8) anweist, die Datenrate der von der Datenverarbeitungseinrichtung (8) an die Funkeinrichtung (2) übertragenen Daten (16) zu erhöhen oder zu verringern.

3. Verfahren nach Anspruch 2, **dadurch gekennzeichnet, dass** das erste Steuersignal die Datenverarbeitungseinrichtung (8) anweist, die Anzahl der Datenelemente eines Datenpakets, insbesondere um ein Datenelement, zu erhöhen oder zu verringern.

4. Verfahren zur Differenztakt-Kompensation zwischen dem Taktsystem (23) einer digitalen leitungsgebundenen Datenschnittstelle und dem dazu asynchronen Taktsystem (22) einer digitalen drahtlosen Datenschnittstelle, wobei Nutzdaten (11), welche über die drahtlose Datenschnittstelle im synchronen Betrieb der drahtlosen Datenschnittstelle empfangen werden, über die leitungsgebundene Datenschnittstelle Paket-orientiert übertragen werden, mit den Schritten:
(1) Überwachen des Füllstands (20) mindestens eines zwischen der drahtlosen Datenschnittstelle und der leitungsgebundenen Datenschnittstelle angeordneten Speichers (6), welcher die Nutzdaten (11) zur Zwischenspeicherung aufnimmt und sowohl durch ein Taktsignal (12) des Taktsystems der drahtlosen Datenschnittstelle als auch durch ein Taktsignal (13) des Taktsystems der leitungsgebundenen Datenschnittstelle getaktet wird; **gekennzeichnet durch**
(2) Anpassen der Datenrate der über die leitungsgebundene Datenschnittstelle übertragenen Daten (15) in Abhängigkeit von dem Füllstand (20) des Speichers (6), indem die Anzahl der Datenelemente eines Datenpakets erniedrigt wird, wenn der Füllstand (20) sich unterhalb einer zulässigen Grenze befindet, und die Anzahl der Datenelemente eines Datenpakets erhöht wird, wenn der Füllstand (20) sich oberhalb einer zulässigen Grenze befindet.

5. Verfahren nach Anspruch 4, **dadurch gekennzeichnet, dass** der Verfahrensschritt 2) folgenden Schritt umfasst:
- Übermitteln eines zweiten Steuersignals (19) an einen Funkeinrichtungs-seitigen Treiberschaltkreis (24) zur Ansteuerung der leitungsgebundenen Datenschnittstelle, welches den Funkeinrichtungs-seitigen Treiberschaltkreis (24) anweist, die Datenrate der von der Funkeinrichtung (2) an eine Datenverarbeitungseinrichtung (8) übertragenen Daten (15) zu erhöhen oder zu verringern.

6. Verfahren nach Anspruch 5, **dadurch gekennzeichnet, dass** das zweite Steuersignal (19) den Funkeinrichtungs-seitigen Treiberschaltkreis (24) anweist, die Anzahl der Datenelemente eines Datenpakets, insbesondere um ein Datenelement, zu erhöhen oder zu verringern.

7. Verfahren nach einem der vorherigen Ansprüche, **dadurch gekennzeichnet, dass** die Nutzdaten derartige Nutzdaten sind, über welche eine der drahtlosen Datenschnittstelle zugeordnete Funkeinrichtung (2, 5) hinsichtlich des Informationsgehaltes der Nutzdaten, insbesondere über eine den Nutzdaten zugrunde liegende Codierung, keine Kenntnis besitzt.

8. Verfahren nach einem der vorherigen Ansprüche, **dadurch gekennzeichnet, dass** die drahtlose Datenschnittstelle nach dem Bluetooth-Standard arbeitet.

9. Verfahren nach Anspruch 8 und Anspruch 2, **dadurch gekennzeichnet, dass** das erste Steuersignal auf einem Bluetooth-spezifischen HCI-Event basiert.

10. Verfahren nach einem der vorherigen Ansprüche, **dadurch gekennzeichnet , dass** die leitungsgebundene Datenschnittstelle nach dem USB-Standard arbeitet.

11. Verfahren nach einem der Ansprüche 2 oder 5, **gekennzeichnet durch** den Schritt:
- Interpolieren der empfangenen oder zu sendenden Daten (15, 16) in der Datenverarbeitungseinrichtung (8).

## Claims

1. Method for differential clock pulse compensation between the clock-pulse system (23) of a digital line-connected data interface and the asynchronous clock-pulse system (22) of a digital wireless data interface, wherein user data (17) which is sent over the wireless data interface in the synchronous mode of the wireless data interface is transmitted over the line-connected data interface in a packet-based manner, having the steps:
(1) monitoring the occupancy level (21) of at least one memory (7) arranged between the wireless data interface and the line-connected data interface, which memory admits the user data (17) for temporary storage, and is clocked both by a clock-pulse signal (12) of the clock-pulse system of the wireless data interface and by a clock-pulse signal (13) of the clock-pulse system of the line-connected data interface; **characterized by**
(2) adapting the data rate of the data (16) transmitted over the line-connected data interface depending on the occupancy level (21) of the memory (7), in that the number of data elements in a data packet is increased if the occupancy level (21) is below a permitted limit, and the number of data elements in a data packet is reduced if the occupancy level (21) is above a permitted limit.

2. Method according to Claim 1, **characterized in that** the method step 2) comprises the following step:
- sending of a first control signal depending on the occupancy level (21) over the line-connected data interface to a data processing device (8) connected to the radio device (2) over the line-connected data interface, which signal instructs the data processing device (8) to increase or to decrease the data rate of the data (16) transmitted from the data processing device (8) to the radio device (2).

3. Method according to Claim 2, **characterized in that** the first control signal instructs the data processing device (8) to increase or to decrease the number of data elements in a data packet, in particular by one data element.

4. Method for differential clock pulse compensation between the clock-pulse system (23) of a digital line-connected data interface and the asynchronous clock-pulse system (22) of a digital wireless data interface, wherein user data (11) which is received over the wireless data interface in the synchronous mode of the wireless data interface is transmitted over the line-connected data interface in a packet-based manner, having the steps:
(1) monitoring the occupancy level (20) of at least one memory (6) arranged between the wireless data interface and the line-connected data interface, which memory admits the user data (11) for temporary storage, and is clocked both by a clock-pulse signal (12) of the clock-pulse system of the wireless data interface and by a clock-pulse signal (13) of the clock-pulse system of the line-connected data interface; **characterized by**
(2) adapting the data rate of the data (15) transmitted over the line-connected data interface depending on the occupancy level (20) of the memory (6) , in that the number of data elements in a data packet is reduced if the occupancy level (20) is below a permitted limit, and the number of data elements in a data packet is increased if the occupancy level (20) is above a permitted limit.

5. Method according to Claim 4, **characterized in that** the method step 2) comprises the following step:
- transferring a second control signal (19) for controlling the line-connected data interface to a driver circuit (24) on the radio device side, which signal instructs the driver circuit (24) on the radio device side to increase or to decrease the data rate of the data (15) transmitted from the radio device (2) to the data processing device (8).

6. Method according to Claim 5, **characterized in that** the second control signal (19) instructs the driver circuit (24) on the radio device side to increase or to decrease the number of data elements in a data packet, in particular by one data element.

7. Method according to one of the preceding claims, **characterized in that** the user data is user data about which a radio device (2, 5) assigned to the wireless data interface has no knowledge with respect to the information content of the user data, in particular about an encoding used for the user data.

8. Method according to one of the preceding claims, **characterized in that** the wireless data interface operates in conformity with the Bluetooth standard.

9. Method according to Claim 8 and Claim 2, **characterized in that** the first control signal is based on a Bluetooth-specific HCI event.

10. Method according to one of the preceding claims, **characterized in that** the line-connected data interface operates in conformity with the USB standard.

11. Method according to one of Claims 2 or 5, **characterized by** the step:
- interpolation of the data (15, 16) received or to be sent in the data processing device (8).

## Revendications

1. Procédé de compensation du signal d'horloge différentiel entre le système d*'*horloge (23) d'une interface de données numérique filaire et le système d'horloge (22), asynchrone par rapport au précédent, d'une interface de données numérique sans fil, des données utiles (17), qui sont envoyées par le biais de l'interface de données sans fil lorsque l'interface de données sans fil est en mode synchrone, étant transmises par paquets par le biais de l'interface de données filaire, ledit procédé comportant les étapes consistant à :
(1) contrôler l'état de remplissage (21) d'au moins une mémoire (7) qui est placée entre l'interface de données sans fil et l'interface de données filaire, qui reçoit les données utiles (7) afin de les mémoriser temporairement et qui est synchronisée aussi bien par un signal d'horloge (12) du système d'horloge de l'interface de données sans fil que par un signal d'horloge (13) du système d'horloge de l'interface de données filaire, **caractérisé par** l'étape consistant à
(2) adapter le débit des données (16) transmises par le biais de l'interface de données filaire (16) en fonction de l'état de remplissage (21) de la mémoire (7) en augmentant le nombre des éléments de données d'un paquet de données lorsque l'état de remplissage (21) se trouve au-dessous d'une limite permise, et en diminuant le nombre des éléments de données d'un paquet de données lorsque l'état de remplissage (21) se trouve au-dessus d'une limite permise.

2. Procédé selon la revendication 1, **caractérisé en ce que** l'étape de procédé (2) comporte l'étape suivante consistant à :
- envoyer, par le biais de l'interface de données filaire, un premier signal de commande en fonction de l'état de remplissage (21) à un dispositif informatique (8) qui est relié à un dispositif radioélectrique (2) par le biais de l'interface de données filaire et qui ordonne au dispositif de traitement de données d'augmenter ou de réduire le débit des données (16) transmises au dispositif radioélectrique (2) par le dispositif informatique (8).

3. Procédé selon la revendication 1, **caractérisé en ce que** le premier signal de commande ordonne au dispositif de traitement de données (8) d'augmenter ou de réduire le nombre des éléments de données d'un paquet de données, notamment d'un élément de données.

4. Procédé de compensation du signal d'horloge différentiel entre le système d'horloge (23) d'une interface de données numérique filaire et le système d*'* horloge (22), asynchrone par rapport au précédent, d*'*une interface de données numérique sans fil, des données utiles (11), qui sont reçues par le biais de l'interface de données sans fil lorsque l'interface de données sans fil est en mode synchrone, étant transmises par paquets par le biais de l'interface de données filaire, ledit procédé comportant les étapes consistant à :
(1) contrôler l'état de remplissage (20) d'au moins une mémoire (6) qui est placée entre l'interface de données sans fil et l'interface de données filaire, qui reçoit les données utiles (11) afin de les mémoriser temporairement et qui est synchronisée aussi bien par un signal d'horloge (12) du système d'horloge de l'interface de données sans fil que par un signal d'horloge (13) du système d'horloge de l'interface de données filaire, **caractérisé par** l'étape consistant à :
(2) adapter le débit des données (15) transmises par le biais de l'interface de données filaire en fonction de l'état de remplissage (20) de la mémoire (6) en diminuant le nombre des éléments de données d'un paquet de données lorsque l'état de remplissage (20) se trouve au-dessous d'une limite permise, et en augmentant le nombre des éléments de données d'un paquet de données lorsque l'état de remplissage (20) se trouve au-dessus d'une limite permise.

5. Procédé selon la revendication 4, **caractérisé en ce que** l'étape de procédé (2) comporte l'étape suivante consistant à :
- transmettre un deuxième signal de commande (19) à un circuit (24) d'excitation du dispositif radioélectrique afin de commander l'interface de données filaire, lequel signal ordonne au circuit (24) d'excitation du dispositif radioélectrique d'augmenter ou de réduire le débit des données (15) transmises à un dispositif de traitement de données (8) par le dispositif radioélectrique (2).

6. Procédé selon la revendication 5, **caractérisé en ce que** le deuxième signal de commande (19) ordonne au circuit (24) d'excitation du dispositif radioélectrique d'augmenter ou de réduire le nombre des éléments de données d'un paquet de données, notamment d'un élément de données.

7. Procédé selon l'une des revendications précédentes, **caractérisé en ce que** les données utiles sont les données utiles telles qu'un dispositif radioélectrique (2, 5) associé à l'interface de données sans fil n'a pas connaissance du contenu informationnel des données utiles, notamment du codage à la base des données utiles.

8. Procédé selon l'une des revendications précédentes, **caractérisé en ce que** l'interface de données sans fil fonctionne selon la norme Bluetooth.

9. Procédé selon la revendication 8 et la revendication 2, **caractérisé en ce que** le premier signal de commande repose sur un événement HCI spécifique à Bluetooth.

10. Procédé selon l'une des revendications précédentes, **caractérisé en ce que** l'interface de données filaire fonctionne selon la norme USB.

11. Procédé selon l'une des revendications 2 ou 5, **caractérisé par** l'étape consistant à :
- interpoler les données reçues ou à émettre (15, 16) dans le dispositif informatique (8).
